# EUROPEAN PATENT APPLICATION

(11) **EP 3 632 725 A1**
(43) Date of publication of application: **08.04.2020**
(21) Application number: 19201190.6
(22) Date of filing: 02.10.2019
(51) Int. Cl.: B60H 1/34, F24F 13/14

(54) **AIR DIFFUSER FOR A VEHICLE**

(30) Priority: 05.10.2018 ES 201830960
(71) Applicant: Seat, S.A., 08760 Martorell (ES)
(72) Inventor: PEÑA MARTÍNEZ, José, 08760 Martorell (ES); DEL CAMPO MELGAREJO, Luis, 08760 Martorell (ES); PÉREZ DÍAZ, Manuel, 08760 Martorell (ES); PÉREZ SERRANO, Rubén, 08760 Martorell (ES)
(74) Representative: Elzaburu S.L.P.

(57) **Abstract**

Air diffuser for a vehicle (1), comprising a casing (2) defining an air inlet opening (21), an air outlet opening (22), and a cavity (23), wherein the casing (2) comprises a first wall (25) and a second wall (26) facing each other defining a narrowing of the cavity (23) up to the outlet opening (22), wherein the air diffuser further comprises a guiding means (3) arranged in the cavity (23), with a first end (34) near the outlet opening (22), being pivotable between a first position, adjacent to the first wall (25), and a second position, adjacent to the second wall (26).

## Description

### Object of the invention

This patent application concerns an air diffuser for a vehicle according to Claim 1, incorporating significant innovations and advantages.

### Background of the invention

Today, vehicles include air diffusers located on the dashboard to guide air into the interior of the vehicle cabin. Diffusers are used in vehicle HVAC systems to distribute airflow in the desired direction. These diffusers usually have a plurality of blades or elements to guide the air into the cabin occupied by the driver and their companions. The system usually has a first set of normally vertical blades arranged in the area furthest from the passenger compartment and a second set of normally horizontal blades. Thanks to the combination of these two sets, air can be directed in all directions. This solution is a disadvantage as it takes up a lot of space on the dashboard and limits the design possibilities for this space in the passenger compartment. In today's automotive sector, there is a tendency to minimise the space occupied by the diffusers and minimise the elements that make up the system.

In this respect, as published in the document EP1331116, in the state of the art there is a known air diffuser for the interior of a vehicle that includes as main elements a guiding means arranged inside the cavity to guide the air coming out of the diffuser through a nozzle, and an adjusting element to adjust the guiding means. The inner walls of the cavity are arc-shaped, particularly in the area close to the outlet, in order to direct the air in such a way that the air adheres to the walls in the outlet direction by the Coand 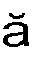 effect. The guiding means is pivotable with respect to the opening, the guiding means being arranged, following the direction of air circulation, before the arched zone.

The problem associated with EP1331116, is that the air cannot be well directed to the outlet of the diffuser, since the air must be adhered to the arched surfaces inside the cavity, especially in the outlet zone. Thus, by constricting the air in the front zone (or zone furthest from the outlet opening), taking as reference the direction of air outlet, the air is constricted to the walls of this first zone, but upon reaching the rear zone (or zone nearest to the outlet opening), taking as reference the direction of air outlet, it expands again, as the duct widens, losing direction of fluid and dispersing in a much wider direction area. This results in a loss of the desired effect of air routing at the outlet. In addition, the solution seen as closest to the state of the art features two pivoting elements, a guiding means and a clogging element, which complicates assembly.

Thus, and in view of all the above, it is clear that there is still a need for an air diffuser for the front ventilation outlet of a vehicle that allows this diffuser to be integrated into the dashboard, occupying a minimum space in the design surface of the dashboard.

### Description of the invention

This invention deals with a car interior diffuser with a central horizontal blade as a guiding means, housed inside a cavity with arched walls, designed to direct the air by the Coand 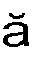 effect. The guiding means can be pivoted on an axle perpendicular to the direction of air outlet to the opening, forming two ducts. Depending on the position of the horizontal blade in the cavity, the air outlet will be totally or partially closed through one of the ducts, directing the air through the other.

To produce this advantageous effect of correct air routing at the outlet, the adjustment element, in this case the guiding means, must have a complementary shape to the arched outlet zone in order to constrict the air to the outlet zone. If the routing is to the outlet zone, the airflow will be prevented from contacting other surfaces and reguiding, which is likely to result in much more limited angles of routing. Thus, before the mode of closing of the outlet in the diffuser of the present invention, any flow, either above or below the air-conducting blade, begins in the rear part of the casing. This zone is the closest to the opening when the blade is pivoted and the front end of the blade faces the outermost part of the casing, being the point closest to the opening.

More particularly, the present invention consists of an air diffuser for a vehicle wherein the air diffuser comprises a casing, wherein the casing defines an air inlet opening, an air outlet opening, and a cavity, wherein the cavity is arranged between the inlet opening and the outlet opening, wherein the casing comprises a first wall and a second wall, wherein the first wall is facing the second wall, wherein the first wall and the second wall define a narrowing of the cavity to the outlet opening, wherein the air diffuser comprises a guiding means arranged in the cavity, wherein the guiding means comprises a first end close to the outlet opening, wherein the guiding means is pivotable between a first position, wherein the first end is arranged adjacent to the first wall, and a second position, wherein the first end is arranged adjacent to the second wall. In this way it is possible to optimise the direction of the air flow, improving the intensity and reducing both interference and load losses. In addition, it is the end of the guiding means close to the outlet opening that pivots. In this way, defined air ducts are generated until the air passes through the outlet opening and leaves the diffuser, improving the guidance of the air flow.

Advantageously, the blade or guiding means is pivotable in a plurality of intermediate positions between the first position and the second position, in such a way that in each intermediate position the guiding means divides the cavity into two ducts.

Thus, the desired effect of directing the air is to generate a narrowing of the air section in the area near the air outlet opening. This narrowing will increase the velocity of the airflow and, by the Coand 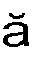 effect, expel the air from the diffuser by copying the direction of the casing walls. The direction of the air can therefore be adjusted by means of a single blade or guiding means. It should be noted that the guidance will be in a plane, for example, in the vertical plane, allowing the air to be guided towards an elevated zone, for example directly contacting the roof of the vehicle or the head of the user, to a low zone, for example directly contacting the legs of the user. For guidance in the horizontal plane, additional guidance elements are required.

Specifically, the blade or guiding means is configured to adjust the volume ratio of the two flows, upper and lower, depending on their position. When the blade or guiding means is in its horizontal position, the ratio of the two flows is proportional and the air flow has a substantially horizontal direction. Thus, when the blade is in a horizontal position, it divides the chamber into two identical flow circulation zones, and the air is extracted in a substantially horizontal direction.

According to another aspect of the invention, the guiding means comprises an upper surface, wherein the upper surface is substantially parallel to the second wall, the guiding means being in the first position, and because the guiding means comprises a lower surface, wherein the lower surface is substantially parallel to the first wall, the guiding means being in the second position. Thus pursuing the formation of a duct without narrowing or widening, that is, a clean air duct formed by two substantially parallel walls, which helps to conduct and emit the air upward or downward, through the outlet opening of the diffuser.

Specifically, the upper surface of the guiding means is symmetrical to the lower surface of the guiding means with respect to the first axle. The first axle is the axle arranged parallel to the direction of air outlet. This ensures that the upper airflow and the lower airflow are equal.

Preferably the guiding means comprises a substantially oval section, in such a way that the upper surface of the guiding means and the lower surface of the guiding means are parallel, thus favouring the Coand 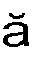 effect. The arched surfaces of the guiding means favour the flow of air, reducing the formation of turbulence in the cavity.

Additionally, the guiding means comprises a second end close to the inlet opening, wherein the second end and the first end are rounded, wherein the radius of curvature of the second end is greater than the radius of curvature of the first end, thus favouring the Coand 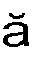 effect, and the uniformity of the airflow at the outlet.

More specifically, the first wall comprises an upper edge and the second wall comprises a lower edge, wherein the upper edge and lower edge define the outlet opening, wherein the first end is configured to remain facing the upper edge, with the guiding means in the first position, and wherein the first end is configured to remain facing the lower edge, with the guiding means in the second position. In this way, the intensity of the outflow through the outlet opening in a first or second position is greater, as the small air duct that runs between the blade and the edge against which it is facing, joins the main air duct increasing the flow. In addition, the walls that limit the air duct to the outlet opening are continuous, preventing the formation of sharp edges that would worsen air routing.

It is worth mentioning that the first end is susceptible to contact with the first wall, the guiding means being in the first position, and wherein the first end is susceptible to contact with the second wall, the guiding means being in the second position. In this way, a watertight seal is produced, preventing air from escaping through one of the two ducts.

It should be noted that, in a particular embodiment, the first end of the guiding means, or guiding means, comprises an extension, wherein the extension passes through the air outlet opening. This closes the air outlet through one of the two ducts and the guiding means can be moved manually by the user without the need for additional mechanisms.

In another embodiment of the invention, the casing comprises a third wall and a fourth wall, wherein the third wall is arranged between the inlet opening and the first wall, and wherein the fourth wall is arranged between the inlet opening and the second wall, wherein the first wall and the third wall are facing the second wall and the fourth wall. The casing preferentially forms a continuous surface, i.e. without major changes of level, improving the Coand 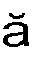 effect on the casing walls and avoiding the turbulence generated by changes of level.

In an alternative embodiment of the invention, the third wall and the fourth wall are substantially flat, presenting a high continuity and minimising the space occupied by the diffuser.

In another alternative embodiment of the invention, the third wall and the fourth wall define a widening of the cavity from the inlet opening, in such a way that by widening the intermediate zone prior to the air outlet zone, a greater exit angle can be achieved by improving air routing.

In yet another alternative embodiment of the invention, the third wall and the fourth wall define a narrowing of the cavity from the inlet opening, in such a way that the air inlet of the cavity having the necessary dimensions to get to direct the air flow at the outlet, the material of the casing is reduced, not being necessary to widen the casing in an intermediate zone.

According to another aspect of the invention, the guiding means pivots on a second axle perpendicular to the air outlet direction, in such a way that the angular regulation of the guiding means is transferred directly to the flow and orientation of the air flow.

According to a preferred embodiment of the invention, the outlet opening comprises a single slot or hole in the surface of the dashboard, thus reducing the minimum space required to be able to direct air into the interior of the vehicle, eliminating the visible blades.

Thus, the present invention, in its simplest form, presents a front aeration diffuser that is integrated into the panel in the form of a simple slot, allowing air to be directed in all directions from a kinematics that can be manual or electric. The system used involves the elimination of visible horizontal blades and, from a single slot, it is possible to direct the airflow outlet in all directions.

The attached drawings show, by way of a non-limiting example, an air diffuser for a vehicle, constituted in accordance with the invention. Other characteristics and advantages of such an air diffuser for a vehicle, which is the subject of this invention, will be evident from the description of a preferred, but not exclusive, embodiment illustrated by way of a non-limiting example in the accompanying drawings in which:

### Brief description of the drawings

Figure 1. A perspective view of the interior of a vehicle with an air diffuser, according to the present invention.
Figure 2A. A first cross-section view of an air diffuser for a vehicle, with the guiding means in horizontal position, according to the present invention.
Figure 2B. A second cross-section view of an air diffuser for a vehicle, with the guiding means in an upward inclined position, according to the present invention.
Figure 2C. A third cross-section view of an air diffuser for a vehicle, with the guiding means in a downward inclined position, in accordance with the present invention.
Figure 3A. A first cross-section view of an air diffuser for a vehicle, with an ovoid-shaped guiding means, according to the present invention.
Figure 3B. A second cross-section view of an air diffuser for a vehicle, with a guiding means wherein one of the radii of curvature of one of its ends is greater than the other, according to the present invention.
Figure 4A. A first cross-section view of an air diffuser for a vehicle, with guiding means, and second axle of rotation in its rear part, according to the direction of exit of the air flow, according to the present invention.
Figure 4B. A second cross-section view of an air diffuser for a vehicle, with guiding means, and second axle of rotation in its middle part, according to the direction of exit of the air flow, according to the present invention.
Figure 5A. A first cross-section view of an air diffuser for a vehicle, with guiding means, and guided upwards with its first end flush with the upper edge, according to the present invention.
Figure 5B. A second cross-section view of an air diffuser for a vehicle, with a guiding means, and guided upwards with its first end in the proximity of the superior edge, according to the present invention.
Figure 6A. A first cross-section view of an air diffuser for a vehicle, wherein the walls of the casing define firstly a widening of the cavity and, secondly, a narrowing of the cavity, according to the present invention.
Figure 6B. A second cross-section view of an air diffuser for a vehicle, wherein the walls of the casing define a continuous narrowing of the cavity, according to the present invention.
Figure 7. A detailed perspective view of an air diffuser for a vehicle, with a central actuator to guide the guiding means, according to the present invention.

### Description of a preferred embodiment

In view of the above-mentioned figures and in accordance with the numbering adopted, an example of the preferred embodiment of the invention can be observed in them, which includes the parts and elements indicated and described in detail below.

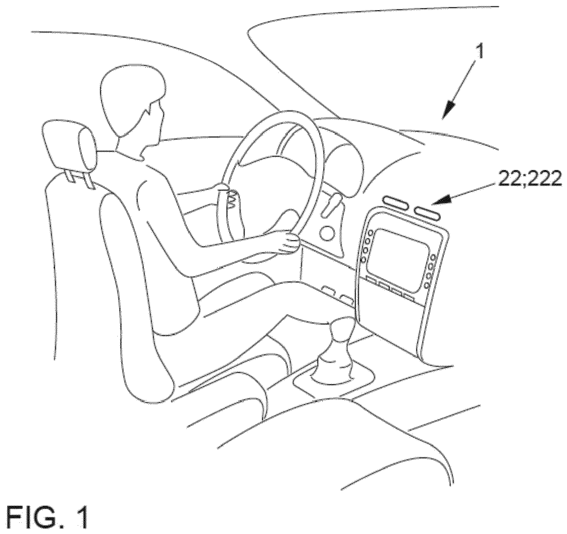

Figure 1 shows, for illustration purposes, a perspective view of the interior of the passenger compartment of a vehicle 1 with an air diffuser, including an outlet opening 22 and a slot 222.

An objective of the present invention is that the air outlet surface, which is what a user sees from inside the vehicle 1, should be as narrow as possible. With the configuration presented by the present invention, it is obtained, in a preferential embodiment, that the height of the outlet opening 22 has a height less than 20 mm, preferably of 12 mm. Thus, the outlet surface or outlet opening 22 would be a wide rectangle but with a reduced height of dimensions. In a preferred embodiment, the angle formed by the upper wall and the lower wall in the exit area are 70° or less in height, in such a way that the exhaust air covers the occupant's comfort zone. It does not require a plurality of blades arranged on the outside of the diffuser, as implemented in the diffusers known today, but a single blade not visible from inside the cabin can direct the air with opening angles that ensure the comfort of the occupant inside the vehicle 1.

It should be pointed out that the guiding means 3 is unique, in such a way that the air can be directed by pivoting only one guiding means 3. This guidance is in a single direction, e.g. vertical guidance of the outgoing air flow through the outlet opening 22. For horizontal guidance, at least one additional blade, arranged behind the guiding means 3, is required in a particular embodiment to guide the outgoing air flow horizontally through the outlet opening 22.

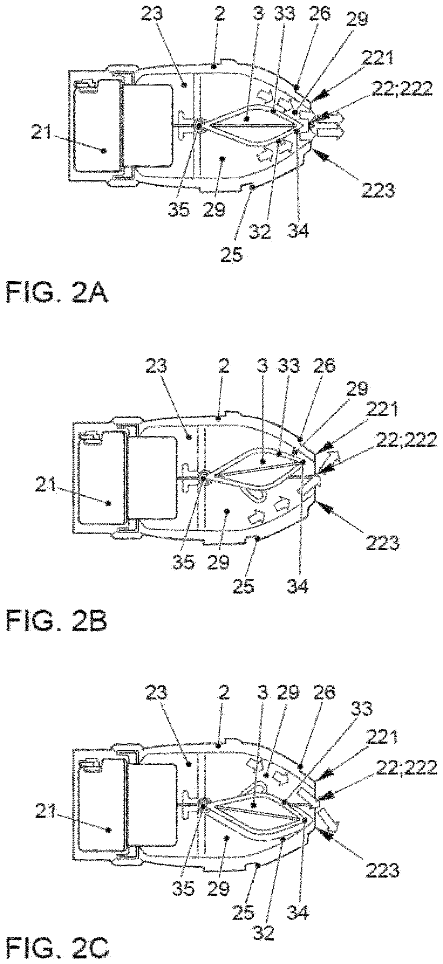

Figure 2A shows a vertical section of the diffuser of the present invention. This section allows you to observe the air flow from inlet opening 21 to the outlet opening 22. In order to be able to direct and guide the airflow in the vertical plane, i.e. towards the upper and lower areas of the vehicle interior, the diffuser comprises a guiding means 3 arranged inside a cavity 23 which, in combination with the geometry of the walls of the casing 2 which define this cavity 23, allows the airflow extracted by the diffuser to be effectively guided.

Figure 2A shows, for illustration purposes,a first section view of an air diffuser for a vehicle 1, with guiding means 3 in a horizontal position, wherein the guiding means 3 divides the cavity 23 into an air duct 29 running above and another duct 29 running below, with an air flow outlet in a horizontal position. Specifically, the casing 2, an inlet opening 21 and an outlet opening 22, which comprises an upper edge 221, a slot 222 and a lower edge 223.

The guiding means 3, comprises a first end 31 and a second end 35, generating at least one duct 29 of air flow.

In this neutral position, the blade or guiding means 3 is positioned horizontally with respect to the plane of air inlet to the vehicle 1. In this position the air entering through the duct 29 into the cavity 23 adheres to both the first wall 25 and the second wall 26 which form the cavity 23 and, as no obstacles are encountered, exits in a horizontal direction from the cavity 2 to the outside. The ratio of upper and lower flow volume is proportional and the direction of the air outlet is horizontal.

Figure 2B shows, for illustration purposes, a second cross-section view of an air diffuser for a vehicle 1, with guiding means 3 in the first position inclined upwards, and an air duct 29 underneath, with an airflow outlet from the lower part of the casing 2 upwards. In this first position, the blade or guiding means 3 pivots closing totally or partially the exit of the upper duct 29 through wherein the first flow passes, blocking said duct 29 and forcing the air to constrict against the lower surface of the cavity 23, exiting the cavity 23 in the direction of the upper part. Thus, in this first position of the guiding means 3, the air is forced to exit through the outlet opening 22 through a duct 29 generated by the lower surface 32 of the guiding means 3 and the first wall 25. Both the lower surface 32 and the first wall 25 are substantially parallel in this final section of the cavity 23 and arranged slightly inclined upwards, with respect to a horizontal plane, in such a way that the airflow is directed to the upper areas of the vehicle cabin.

Figure 2C shows, for illustration purposes, a third cross-section view of an air diffuser for a vehicle 1, with guiding means 3 in the second position inclined downwards, and an air duct 29 at the top, with an airflow outlet from the top of the casing 2 downwards. In this second position, the blade or guiding means 3 pivots closing totally or partially the exit of the lower duct 29 through wherein the second flow passes, blocking the exit and forcing the air to be constricted against the upper surface of the cavity 23 exiting the casing 2 in the direction towards the lower part. Thus, in this second position of the guiding means 3, the air is forced to exit through the outlet opening 22 through a duct 29 generated by the upper surface 33 of the guiding means 3 and the second wall 26. Both the upper surface 33 and the second wall 26 are substantially parallel in this final section of the cavity 23 and arranged slightly inclined downwards, with respect to a horizontal plane, in such a way that the airflow is directed to lower areas of the vehicle cabin.

It should be noted that there is a plurality of intermediate positions between the first position of the guiding means 3 and the second position of the guiding means 3. In these intermediate positions, the guiding means 3 does not fully close either the upper duct 29 or the lower duct 29, in such a way that a mixture of the two air flows is produced. If the airflow through the lower duct 29 predominates over the airflow through the upper duct 29, the airflow through the outlet opening 22 shall be directed slightly towards higher areas of the vehicle interior.

Advantageously, the guiding means 3 is arranged in an area close to the outlet opening 22 of the air flow, in such a way that the air is guided in the final zone of the diffuser, ensuring that the air leaving the diffuser maintains the routing induced both by the guiding means 3 and by the walls of the casing 2.

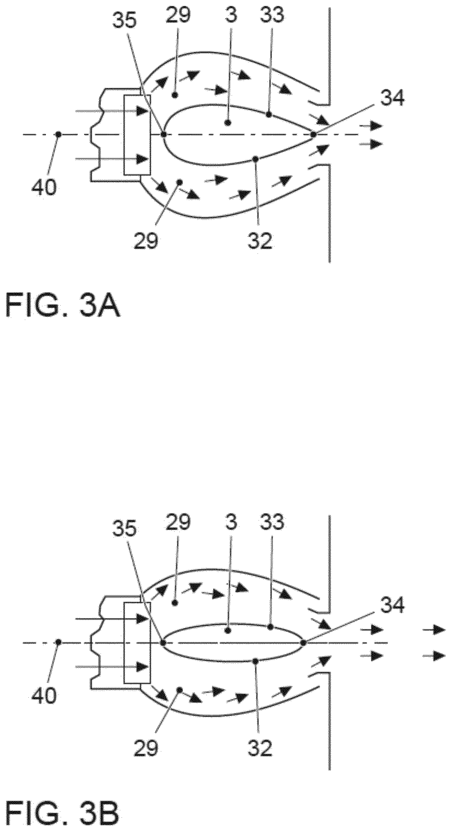

Figure 3A shows, for illustration purposes, an ovoid-shaped guiding means 3. The guiding means 3 or central blade has a curved shape whose upper surface 33 in the area closest to the air outlet is parallel to the second wall 26 of the cavity 23, being in the first position. In addition, the guiding means or central blade 3 has a curved shape whose lower surface 32 in the area closest to the air outlet is parallel to the first wall 26 of the cavity 23, being in a second position, favouring the generation of a defined duct 29 and improving the direction of flows. The geometry of the guiding means 3, being complementary to the curved geometry of the interior of the cavity 23, produces a decrease in friction.

Figure 3A shows, for illustration purposes, the guiding means 3 or central blade that comprises two surfaces faced with a curved zone and the first end 34 and the second end 35 are rounded, wherein the radius of curvature of the first end 34 is smaller than that of the second end 35, in such a way that the inferior surface 32 and superior surface 33 of the guiding means are parallel to the central walls respectively. A first axle 40 can be observed parallel to the direction of the air outlet.

Figure 3B shows an alternative embodiment of the guiding means 3, comprising two surfaces facing a curved zone and the first end 34 and the second end 35 are rounded, wherein the radius of curvature of the first end 34 is the same as that of the second end 35. The first axle 40 can be seen parallel to the direction of the air outlet.

Figures 3A and 3B show that the upper surface 33 of the guiding means 3 is symmetrical to the lower surface of the guiding means with respect to a first axle 40 parallel to the air outlet direction.

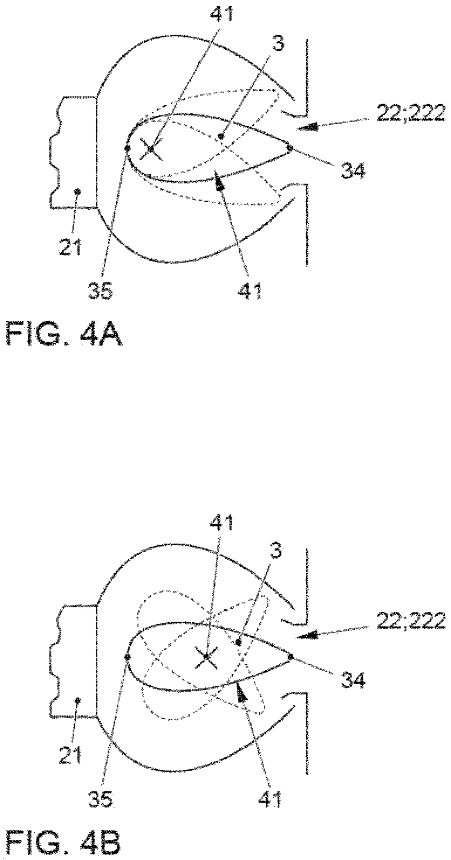

Figure 4A shows, for illustrative purposes, a first cross-section view of an air diffuser for a vehicle 1, with guiding means 3, and a second axle 41 at the rear, depending on the direction of the air flow outlet. Specifically, the casing 2 has an inlet opening 21, and an outlet opening 22, with a slot 222. Inside there is a guiding means 3 with a second end 35 and a first end 34, and a second axle 41, on which the guiding means 3 pivots. It is observed that the guiding means 3 or central blade pivots on the second axle 41 perpendicular to the direction of air outlet, with the second axle 41 arranged between the second end 35, the closest to the air inlet, and the centre 43 of the guiding means 3 or blade. Where the centre is defined as the midpoint between the first end 34 and the second end 35. With the second axle 41 at the second end 35, the closest to the air inlet, this favours better air routing.

Figure 4B shows, for illustration purposes, a second cross-section view of an air diffuser for a vehicle, with a guiding means, and second axle 41 arranged alternately in its middle part or centre 43, depending on the direction of airflow outlet.

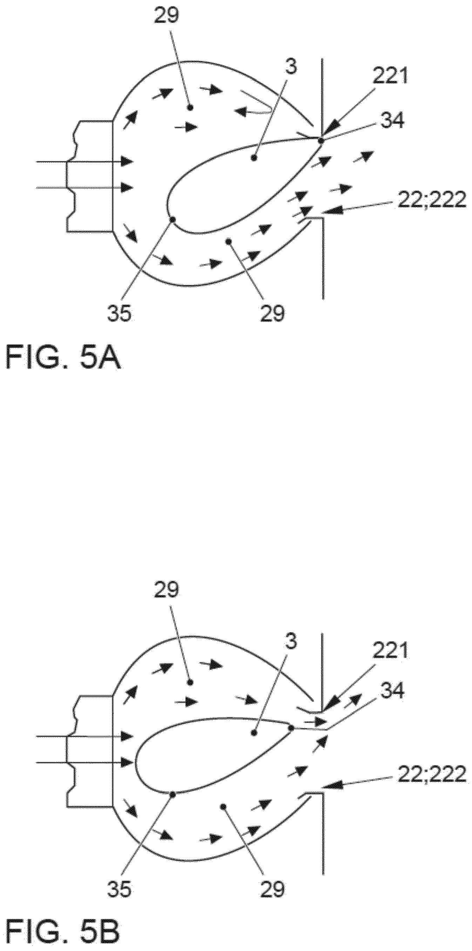

Figure 5A shows, for illustrative purposes, a first cross-section view of an air diffuser for a vehicle 1, with a guiding means 3, and facing upwards with its first end 34 flush with the upper edge 221, closing the upper duct 29, and all the air flow exiting through the lower duct 29 of the casing 2, according to the direction of air flow outlet. Specifically, there is a casing 2 with a cavity 23 comprising an inlet opening 21, an outlet opening 22, and a slot 222. The housing 2 houses a guiding means 3 with a second end 35 and a first end 34 forming at least one duct 29 for airflow. The first end 34 is in contact with the casing 2, closing the air outlet of one of the flows, achieving watertightness and preventing leaks. Optionally, to ensure tightness, an EPDM or similar material can be over-injected into the first end 34 of the guiding means 3 or blade, thus improving the tightness between the guiding means 3 or blade and the casing 2.

Figure 5B shows, for illustrative purposes, a second cross-section view of an air diffuser for a vehicle 1, with an ovoid-shaped guiding means 3, and guided upwards with its first end 34 in the proximity of the upper edge 221, narrowing the outlet of the upper duct 29, and exiting most of the airflow through the lower duct 29 of the casing 2, according to the direction of the airflow outlet. The first end 34 of the blade and the casing 2 are facing each other, leaving a hole through which a small amount of air escapes. This air flow joins the flow near the bottom of the casing 2 in the outlet zone of both ducts 29, in such a way that the guiding means 3 or blade is flush with the point closest to the outlet, allowing better air routing. Thus, the air does not hit the balcony or internal wall of the casing 2. The entire air flow is conducted through the duct 29 formed between the casing 2 and guiding means 3 or blade, allowing the air flow to be directed more optimally.

Alternatively, the guiding means 3 may exceed the outlet opening 22, thus eliminating the possibility of the airflow directly contacting the top edge 221 or the bottom edge 223.

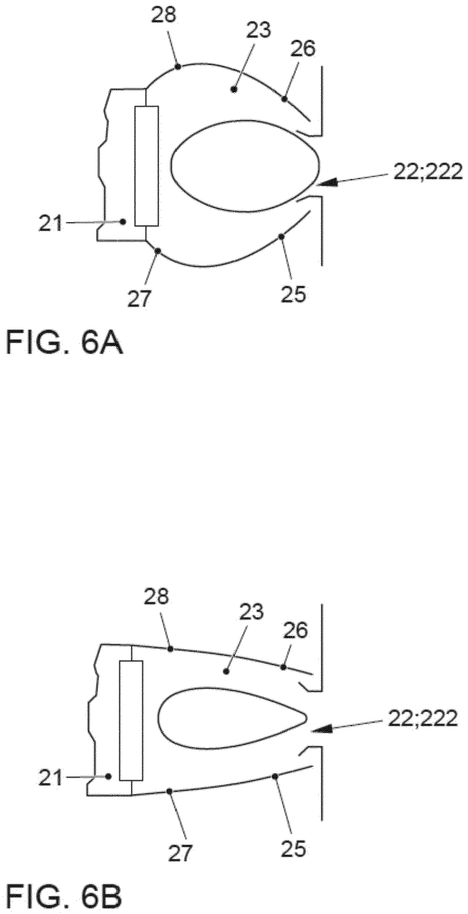

Figure 6A shows, for illustration purposes, a first cross-section view of an air diffuser for a vehicle with casing 2 with rounded walls and guiding means 3 guided horizontally. The cavity 23 has a first wall 25, a second wall 26, a third wall 27, and a fourth wall 28, and houses guiding means 3, with a second end 35 and a first end 34, in order to form at least one duct 29. In order to improve the efficiency of the routing, different solutions are proposed, keeping the curvature close to the air outlet. In Figure 6A the cavity has two facing interior walls, the first wall 25 and the third wall 27 facing the second wall 26 and the fourth wall 28. Both walls have an arched zone in the intermediate zone between the air inlet opening 21 in the cavity 23 and the outlet opening 22. This zone is higher/larger than the zone or air inlet opening 21 and the air outlet opening 22. Thus, with respect to the section defined by the inlet opening 21, the third wall 27 and the fourth wall 28 define a widening of the cavity 23. Subsequently, the first wall 25 and the second wall 26 define a narrowing of the cavity 23 up to the outlet opening 22.

Figure 6B shows, for illustration purposes, an alternative second arrangement of the casing 2. Thus, the casing 2 comprises substantially rounded walls. Similarly, the first wall 25 and the third wall 27 are facing the second wall 26 and the fourth wall 28. The dimension of the highest or largest section zone is equal to the air inlet zone, or inlet opening 21 and progressively narrows towards the air outlet zone, or outlet opening 22. Thus, the section defined by the outlet opening 22 is smaller than the section defined by the inlet opening 21. Similarly, the first wall 25 and the second wall 26 define a narrowing of the cavity 23 up to the outlet opening 22.

Alternatively, the third wall 27 and the fourth wall 28 are substantially flat, in such a way that the section defined by the inlet opening 21 remains constant. Subsequently, the first wall 25 and the second wall 26 define a narrowing of the cavity 23 up to the outlet opening 22.

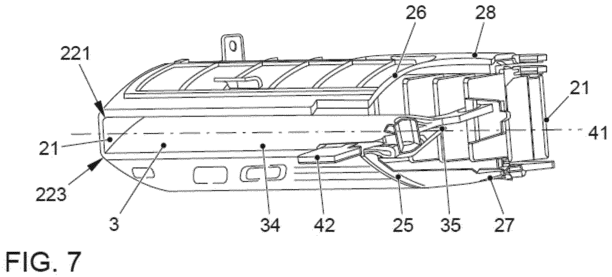

Figure 7 shows, for illustration purposes, a detailed perspective view of an air diffuser for a vehicle 1 with a central actuator for the guiding means 3. More in detail, it is observed that the actuator 42 allows the position of the central blade or the guiding means 3 to be modified. In this way, the air flow in the vertical plane can be modified according to the configuration shown in this invention. For this purpose, the actuator 42 can be, depending on the first embodiment, an extension of the central blade or guiding means 3 that crosses the outlet surface or opening of the air outlet 22. In this way, the actuator 42 can be operated directly by the user. On the other hand, a mechanism such as those known today can be used, with connecting rods and/or gears that transmit the movement of an external actuator until the position of the central blade or guiding means 3 is modified.

Depending on the method of embodiment shown in Figure 7, a single actuator 42 is used to act both on the guiding means 3 and on at least one blade located in the anterior area of the cavity 23. At least one blade is necessary to change the direction of airflow in the horizontal plane, i.e. towards a right or left part of the interior of the passenger compartment. The actuator 42 crosses the guiding means 3 to act directly on at least one blade, wherein at least one blade is arranged adjacent to the inlet opening 21.

The details, shapes, dimensions and other accessory elements, as well as the components used in the implementation of the air diffuser for a vehicle, may be conveniently replaced by others that are technically equivalent, and do not deviate from the essentiality of the invention or from the scope defined by the claims listed below.

### List of numerical references:

- 1: vehicle
- 2: casing
- 21: inlet opening
- 22: outlet opening
- 221: top edge
- 222: slot
- 223: bottom edge
- 23: cavity
- 25: first wall
- 26: second wall
- 27: third wall
- 28: fourth wall
- 29: duct
- 3: guiding means
- 32: lower surface
- 33: upper surface
- 34: first end
- 35: second end
- 40: first axle
- 41: second axle
- 42: actuator
- 43: centre

## Claims

1. Air diffuser for a vehicle (1), wherein the air diffuser comprises a casing (2), wherein the casing (2) defines:
- an air inlet opening (21),
- an air outlet opening (22), and
- a cavity (23), wherein the cavity (23) is arranged between the inlet opening (21) and the outlet opening (22),
wherein the casing (2) comprises a first wall (25) and a second wall (26), wherein the first wall (25) is facing the second wall (26), wherein the first wall (25) and the second wall (26) define a narrowing of the cavity (23) to the outlet opening (22), wherein the air diffuser comprises a guiding means (3) arranged in the cavity (23), wherein the guiding means (3) comprise a first end (34) close to the outlet opening (22), **characterized in that** the guiding means (3) is displaceable between a first position, wherein the first end (34) is arranged adjacent to the first wall (25), and a second position, wherein the first end (34) is arranged adjacent to the second wall (26).

2. Air diffuser according to Claim 1, **characterized in that** the guiding means (3) is pivotable in a plurality of intermediate positions between the first position and the second position, in such a way that in each intermediate position the guiding means (3) divides the cavity (23) into two channels.

3. Air diffuser according to any of the above claims, **characterized in that** the guiding means (3) comprises an upper surface (33), wherein the upper surface is substantially parallel to the second wall (26), the guiding means (3) being in the first position, and **in that** the guiding means (3) comprises a lower surface (32), wherein the lower surface is substantially parallel to the first wall (25), the guiding means (3) being in the second position.

4. Air diffuser according to one of the Claims 3, **characterized in that** the upper surface (33) of the guiding means is symmetrical to the lower surface of the guiding means with respect to a first axle (40), wherein the first axle (40) is parallel to the direction of air outlet.

5. Air diffuser according to Claim 4, **characterized in that** the guiding means (3) comprises a substantially oval section.

6. Air diffuser according to any of the above claims, **characterized in that** the guiding means (3) comprises a second end (31) close to the inlet opening (21), wherein the second end (31) and the first end (34) are rounded, wherein the radius of curvature of the second end (31) is greater than the radius of curvature of the first end (34).

7. Air diffuser according to any of the above claims, **characterized in that** the first wall (25) comprises an upper edge (221) and because the second wall (26) comprises a lower edge (223), wherein the upper edge (221) and lower edge (223) define the outlet opening (22), wherein the first end (34) is configured to remain facing the upper edge (221), with the guiding means (3) in the first position, and wherein the first end (34) is configured to remain facing the lower edge (223), with the guiding means (3) in the second position.

8. Air diffuser according to any of the above claims, **characterized in that** the first end (34) is susceptible to contact with the first wall (25), the guiding means (3) being in the first position, and wherein the first end (34) is susceptible to contact with the second wall (26), the guiding means (3) being in the second position.

9. Air diffuser according to any of the Claims 1 to 6, **characterized in that** the first end (34) goes through the air outlet opening (22).

10. Air diffuser according to any of the above claims, **characterized in that** the casing (2) comprises a third wall (27) and a fourth wall (28), wherein the third wall (27) is arranged between the inlet opening (21) and the first wall (25), and wherein the fourth wall (28) is arranged between the inlet opening (21) and the second wall (26), wherein the first wall (25) and the third wall (27) are facing the second wall (26) and the fourth wall (28).

11. Air diffuser according to Claim 10, **characterized in that** the third wall (27) and the fourth wall (28) are substantially flat.

12. Air diffuser according to Claim 10, **characterized in that** the third wall (27) and the fourth wall (28) define a widening of the cavity (23) from the inlet opening (21).

13. Air diffuser according to Claim 10, **characterized in that** the third wall (27) and the fourth wall (28) define a narrowing of the cavity (23) from the inlet opening (21).

14. Air diffuser according to any of the above claims, **characterized in that** the guiding means (3) pivots on a second axle (41) perpendicular to the direction of air outlet.

15. Air diffuser for vehicle interior (1) according to any of the above claims, **characterized in that** the outlet opening (22) comprises a single slot (222).
